# EUROPEAN PATENT SPECIFICATION

(11) **EP 4 377 050 B1**
(45) Date of publication and mention of the grant of the patent: **15.04.2026**
(21) Application number: 21752043.6
(22) Date of filing: 29.07.2021
(51) Int. Cl.: B25J 9/16, B25J 13/08, B25J 15/02, B25J 15/10, B25J 19/02

(54) **ROBOT GRIPPER AND METHOD OF USING IT**
ROBOTERGREIFER UND ANWENDUNGSVERFAHREN
DISPOSITIF DE PRÉHENSION DE ROBOT ET SON PROCÉDÉ D'UTILISATION

(43) Date of publication of application: 05.06.2024
(73) Proprietor: ABB Schweiz AG, 5400 Baden (CH)
(72) Inventor: VANDERHOYDONK, Willem, 1500 Halle (BE); LEROY, Rudi, 1654 Huizingen (BE)
(74) Representative: Maiwald GmbH
(86) International application number: PCT/EP2021/071299
(87) International publication number: WO 2023/006208

(56) References cited:
- CN-A- 101 012 029
- CN-A- 110 255 185
- CN-A- 111 136 676
- DE-A1- 3 823 621
- US-A1- 2017 274 539
- US-A1- 2018 169 870
- US-B1- 9 486 927

## Description

The present invention relates to a robot gripper, to a robotic system comprising the robot gripper and to methods of using it.

Despite intensive development efforts, versatility and dexterity of current robot grippers falls far short of those of the human hand. Most two-finger grippers can hold an object only by squeezing it, so that if an object yields to the squeezing pressure, it is likely to escape from the gripper, or, if the gripper is controlled to maintain a certain squeezing pressure, be crushed by it. When a gripping surface isn't cushioned, it will exercise its squeezing force only onto a very limited surface region of the object, and is thus likely to damage it. Grippers with three curved fingers can seize an object without pressing it, but are ill-suited for handling objects of cuboid shape. The US 2017274539 A1 refers to an end effector, a robot, and a robot control apparatus. The CN 101012029 A refers to a hand claw mechanism of an intelligent manipulator palletizer. The DE 3823621 A1 refers to a gripper for gripping and handling workpieces. The CN 111136676 A, on which the preamble of claim 1 is based, refers to a width-adaptive box clamp for an annular warehouse robot. The CN 110255185 A refers to a clamping device.

It is an object of the present invention to provide a robot gripper by which a large variety of differently shaped objects, yielding or unyielding, can be handled.

The object is achieved by a modified two-finger gripper, i.e. a robot gripper comprising a palm and first and second fingers connected to said palm that have gripping surfaces facing each other for gripping an object between them and that are displaceable with respect to each other along a first axis normal to said gripping surfaces, the modification being in that the palm carries at least a third finger having a support surface, wherein, when the gripper is in a use pose in which the support surface is oriented horizontally and facing upward, the first axis is also horizontal, and the gripping surfaces are located above the support surfaces. Thus, since the third finger carries most of the weight of an object being handled, a very slight pressure exercised by the first and second fingers is sufficient for holding the object safely.

A pointed distal end of the third finger can be helpful for introducing the third finger below the object to be handled.

The third finger is displaceable in parallel to the first axis, in order to adjust its position to the center of gravity of the object.

The third finger is displaceable between different sides of a plane defined by the gripping surface of the first finger. By moving the third finger to a side of said plane which is remote from the second finger, the space between the gripping surfaces can be cleared, and the object can be placed on a support directly, without afterwards having to retract the third finger from underneath.

In order to allow the third finger to move independently from the first and second fingers, the palm may comprise a first rail defining the first axis for guiding displacement of the first and second fingers, and a second rail parallel to the first rail and defining a second axis for guiding displacement of the third finger.

A fourth finger may be provided that has a support surface coplanar with the support surface of the third finger and thus assists the third finger in carrying the weight of the object. By spacing the third and fourth fingers apart from each other, stability of support of the object can be improved.

Preferably, the fourth finger is displaceable in parallel to the first axis, too; it may be guided by the second rail mentioned above.

A force or torque sensor should be associated to at least one of the first and second fingers. Controlling displacement of the first and second fingers is facilitated if both have a sensor associated to them, as will be explained in detail below.

In order to facilitate placement of the robot gripper adjacent an object to be seized, the robot gripper may comprise a sensor which is arranged to monitor a space in front of the palm.

Preferably, the sensor is a 2D scanner. The 2D scanner can not only detect whether an object to be seized is present in front of the gripper, but it can also provide quantitative information on the position of the gripper with respect to the object which can be used for adapting the position of the gripper as a whole or, preferably of individual fingers of the gripper. When information from the 2D scanner is to be used for controlling positions of the fingers parallel to the first axis, the 2D scanner should have a detection plane parallel to the first axis or to the support surface.

For fast and efficient operation of the robot gripper, the detection plane should preferably be located between a plane defined by lower edges of the first and second fingers, on the one hand, and the support surface, on the other, so that when the gripper is placed at a height appropriate for introducing the third finger below an object to be seized, the object will extend through the detection plane. Thus, the positions of its first and second fingers can be adjusted to the positions of lateral flanks of the object based on data from the sensor, and when the adjustment is done, the gripper can be advanced to seize the object without any further correction of its position.

According to an alternative preferred embodiment, the sensor and its detection plane are located below the third finger. This design implies that for scanning an object before seizing it, the gripper must first be placed so that its detection plane intersects the object, and then lowered so as to enable introduction of the third finger below the object. The advantage of this embodiment lies in the fact that the 2D scanner isn't blocked by an object held in the gripper, and can therefore be used to inspect a target locating where the object is to be placed, before actually placing the object. place where the object is to be may help to avoid interference of the fingers with the detection of the object by the 2D scanner.

While for gripping and releasing an object it would be sufficient if the first and second fingers were coupled to be displaceable in opposite directions only, in the context of the present invention it is highly desirable that the first and second fingers should be displaceable along said first axis in a same direction or that one of the first and second fingers should be displaceable along the first axis while the other is standing still, as will be explained in more detail below.

A further object of the invention is a robotic system comprising a robot, in particular an articulated robot, equipped with the gripper as described above, and a shelf for storing objects to be handled by the gripper.

In such a system, seizing an object is facilitated by an upper side of the shelf comprising support strips for supporting the object, separated by gaps sized to accommodate the third, and, if present, the fourth finger. Thus, the third and fourth fingers can be inserted longitudinally underneath the object without pushing the object.

A shelving unit may comprise one or more shelves supported by posts. When the gripper is advancing into the shelving unit in the course of steps b) and d), in order to seize an object located close to a post, interference of the post with the gripper palm may prevent the gripper from advancing far enough. Similarly, a big object on the same shelf may hinder advancement of the gripper. According to the invention, this can be avoided by carrying out, prior to steps b) and d), the steps of,
f) identifying an obstacle adjacent to the object to be seized;
g) disposing the gripper in a position in which it does not overlap with the obstacle when seen in the advancing direction, and
h) adjusting the position of one of the first and second fingers to overlap with a space between the object and the obstacle.

The 2D scanner can facilitate seizing an object also in a robot gripper that doesn't have a third or fourth finger. Therefore, the invention also relates to a gripper comprising a palm and first and second fingers connected to said palm that have gripping surfaces facing each other for gripping an object between them and that are displaceable with respect to each other along a first axis normal to said gripping surfaces, wherein the palm further carries a 2D scanner, in particular a 2D scanner having a detection plane parallel to the first axis.

Further features and advantages of the invention will become apparent from the subsequent description of embodiments, referring to the appended drawings.
- Fig.1: is a perspective view of a gripper according to a first embodiment of the invention;;
- Fig. 2: is a perspective view of a gripper according to a second embodiment;
- Fig. 3: is a schematic rear view of a shelf with objects on it and a gripper placed to seize one of them;
- Fig. 4: is a schematic top view of the robotic system of the invention; and
- Fig. 5: illustrates part of a gripper according to a third embodiment.

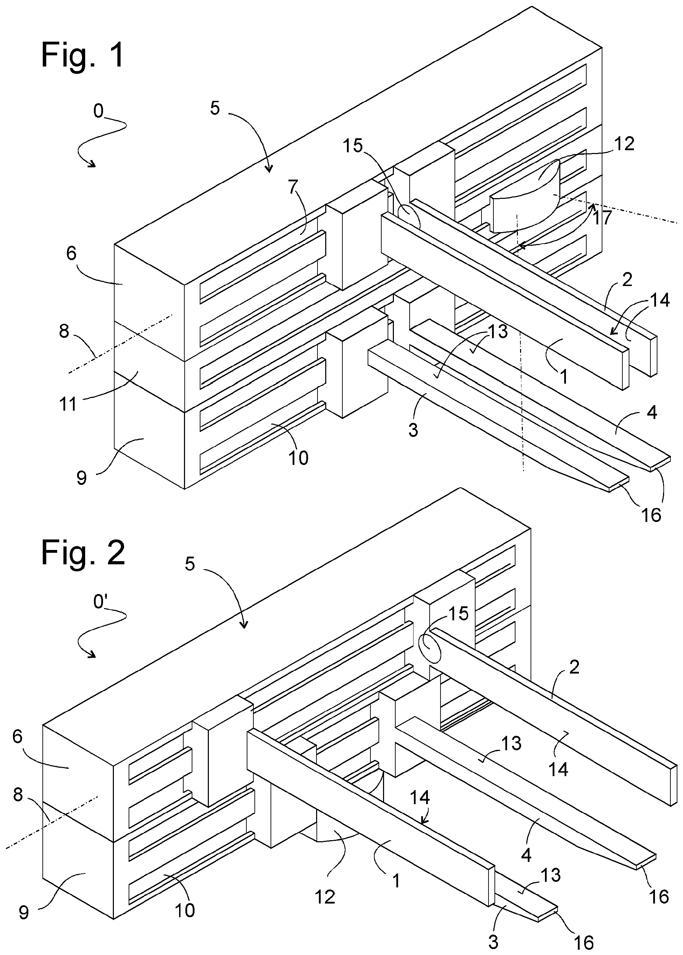

Fig. 1 is a perspective view of a gripper 0 having first to fourth fingers 1-4. In analogy to the human hand, a central portion of the gripper 0 to which the fingers 1-4 are movably connected is referred to as a palm 5. In the embodiment of Fig. 1, the palm 5 comprises a first rail unit 6 defining a rail 7 in which fingers 1 and 2 are displaceable along a first axis 8, a second rail unit 9 defining a rail 10 in which fingers 3 and 4 are displaceable in parallel to first axis 8, and a third rail unit 11 in which a 2D scanner 12 is displaceable in parallel to first axis 8. Each finger 1-4 and the 2D scanner 12 has a motor, not shown, associated to it for driving displacement thereof. Each motor is operable independently of the others.

The fingers 1-4 are elongate in a direction perpendicular to the first axis 8. Fingers 3, 4 have support surfaces 13 that extend in a same plane which, in the pose of Fig. 1, is horizontal. Fingers 1, 2 have gripping surfaces 12 that face each other and extend in a plane perpendicular to axis 8. Each finger 1, 2 has a sensor 15 associated to it, for detecting a force or a torque applied to its gripping surface 12. Fig. 1 and 2 suggest that the sensor 15 is provided on the fingers 1, 2, but in practice, the sensor may just as well be a measurement circuit connected to the motor of a finger and adapted to estimate force or torque based on characteristics of electric currents flowing in the motor.

Fingers 3 and 4 have pointed tips 16, in order to facilitate their introduction below an object to be seized by advancing in their longitudinal direction.

The 2D scanner 12 is shown in a position laterally offset with respect to the fingers 1-4. It is designed to detect objects in a plane 17 by emitting a laser beam in different directions in the plane, and detecting its reflection. The plane 17 is parallel to the plane of the support surfaces 13 and extends at a level between these and the fingers 1, 2. In operation the 2D scanner 12 is most likely to be placed in a central position between the fingers 1-4, in order enable precise detection of the shape of an object to be seized and in front of which the gripper 0 is placed.

In the embodiment of Fig. 1, a certain minimum distance must be maintained in the vertical direction between the plane 17 and between the two pairs of fingers 1, 2 and 3, 4, in order to prevent the fingers 1-4 from interfering with the detection of objects by the 2D scanner 12. Therefore no objects can be seized by gripper 0 whose height is less than this minimum distance.

The gripper 0' of Fig. 2 is capable of seizing smaller objects since the 2D scanner 12 is mounted below the rail unit 9 of fingers 3, 4, and therefore, no minimum distance must be maintained between the plane of the support surfaces 13 and the fingers 1, 2. In order to detect an object prior to seizing it, the gripper 0' must be placed in front of the object at such a height that the sensing plane 17 intersects the object, and the support surfaces 13 are higher than a bottom side of the object. The fingers 3, 4 can therefore be inserted below the object only after the gripper 0' has been lowered appropriately.

Another difference is that in the gripper 0' the 2D scanner 12 has no rail unit associated to it but is immobile with respect to the palm 5, which reduces the cost of the gripper 0'. By displacing the entire gripper 0' in the direction of axis 8, the 2D scanner 12 can still be placed directly in front of an object to be seized, unless displacement of the gripper 0 is prevented by some external obstacle.

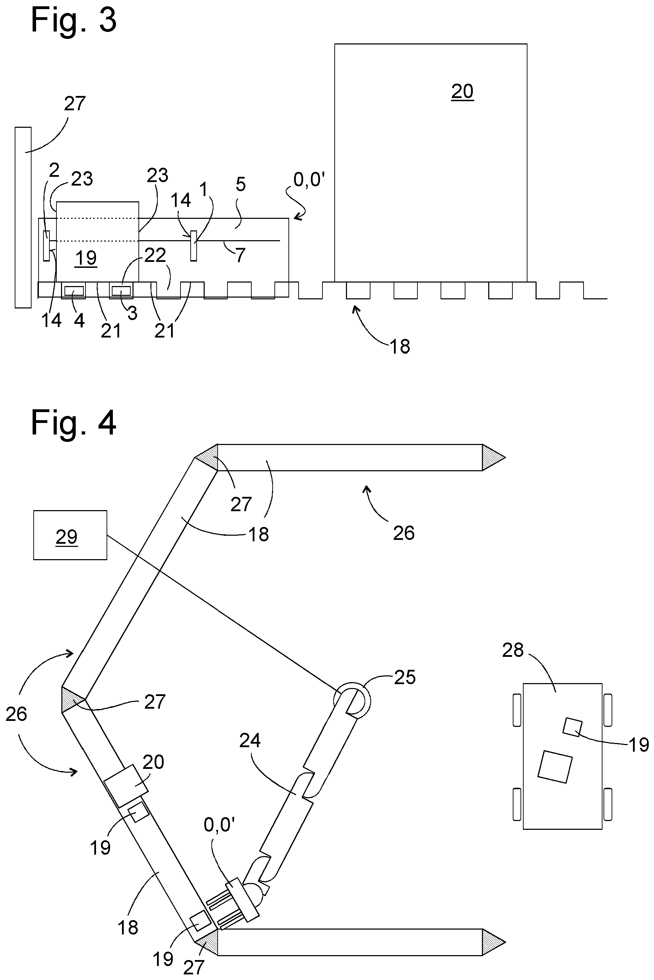

Fig. 3 is a schematic view of a shelf 18 carrying objects 19, 20 to be handled by the gripper 0 or 0'. The view is from a rear side of the shelf 18, opposite to the direction in which the gripper 0, 0' approaches the shelf. An upper side of the shelf 18 is divided into a plurality of support strips 21 that extend in the direction of view and are separated by gaps 22 wide enough to accommodate the fingers 3, 4. The gaps 22 can be grooves in a corrugated profile, opening in the upward direction, as shown in Fig. 3. Else the gaps can be open in upward and downward directions, the strips 21 being individually mounted at a shelf unit rear wall. As a further alternative, the strips 21 can be upper edges of thin webs rising from a horizontal support plate, similar to webs of a conventional heat exchanger. In fact, the width of the support strips 21 can be much less than that of the gaps 22; the narrower the strips are, the easier it is to find a position for the fingers 3, 4 from where they can be inserted into the gaps 22.

In any case, the fingers 3, 4 can be inserted underneath an object 19 by introducing them into the gaps 22 in their longitudinal direction. Since contact between the support surfaces 13 of the fingers 3, 4 and the object 19 can be avoided during the introduction, there is no risk of the object 19 being pushed towards a rear side of the shelf 18 by the fingers 3, 4.

Detection of the position of the object 19 on the shelf 18 by 2D scanner 12 allows adjusting the positions of fingers 1, 2 so that when the fingers 3, 4 are inserted underneath object 19, fingers 1, 2 will pass by lateral flanks 23 of the object 19 at a safe distance, and will not displace the object 19, either.

Preferably, based on data from the 2D scanner, the fingers 1, 2 are adjusted symmetrically with respect to the flanks 23 of the object 19, so that, when the fingers 3, 4 are inserted in the gaps 22 and the fingers 1, 2 face the flanks 23, setting the fingers 1, 2 in motion towards the object 19 at the same time will cause their gripping surfaces 14 to make contact with both flanks 23 at the same time, and to build up pressure on the flanks 23 until the force or torque detected by sensor 15 exceeds a predetermined threshold.

Since contact occurs at both gripping surfaces at the same time, the force is substantially the same on both gripping surfaces 14, so that a single sensor 15 is sufficient for controlling the approach of fingers 1, 2.

If the fingers 1, 2 have been placed asymmetrically with respect to the lateral flanks 23, as shown in Fig. 3, and the fingers 1, 2 are displaced towards each other, finger 2, being closer to object 19 than finger 1, is the first finger to make contact. If there is only one force/torque sensor 15, the force threshold must be set higher than the friction between the object 19 and the shelf 18, so that finger 2 can push the object 19 sideways until finger 1 makes contact, too.

Alternatively, when each finger 1, 2 has a sensor associated to it, and when contact is detected by the sensor 15 of finger 2, displacement of finger 2 can be stopped, whereas finger 1 continues to move until it makes contact with object 19. In this way, gripping surfaces 14 can make contact with both sides of object 19 without pushing it sideways.

In either case pressure exerted on the object by the fingers 1, 2 can be maintained at a level low enough to prevent damage to the object 19.

In a next step the gripper 0, 0' is raised, so that the fingers 3, 4 come into contact with an underside of object 19 and finally come to bear most of the weight of the object 19. The object 19 can now be carried to some other location and placed there.

As shown in Fig. 4, the gripper 0, 0' can form the end effector of an articulate robot 24. When the robot 24 is mounted to a stationary base 25, shelf units 26 can be provided in an arcuate or polygonal arrangement centered around the base, so that all shelf units 26 are easily accessible to the gripper 0, 0' by the robot 24 rotating around base 25. Each shelf unit 26 comprises a plurality of shelves 18 as shown in Fig. 3, held one above the other by posts 27. Seizing a small object 19 on one of these shelves may be difficult when a large object 20 next to it, possibly projecting beyond a front edge of the shelf 18, or a post 27 prevents the gripper from coming close to the front edge.

With the gripper 0, 0' of the invention, this problem is avoided due to the possibility of controlling the displacement of all fingers 1-4 independently from the others. Therefore, the object 19 to be seized doesn't have to be centered in front of the gripper 0, 0'. Instead, the gripper can be asymmetrically disposed, as shown in Fig. 3: Here, the centre of palm 5 is offset to the right with respect to object 19 to such an extent that it doesn't overlap with the post 27. Finger 2 has been placed at the left end of rail 7, facing a space between the left flank 23 of object 19 and the post 27. Finger 1 is placed to the right of the right flank 23. Therefore, the gripper 0 can advance towards object 19 as far as necessary to seize it without being blocked by post 27.

In practical operation, the robotic system of Fig. 4 can be used for e.g. gathering from the shelves 18 and placing on a trolley 28, a conveyor or some other means of transport objects 19 that have been ordered by a user. When an order for a specified object is received by a controller 29 of the robotic system, the controller 29 looks up an inventory of stored objects and retrieves from there an approximate position of the object and, possibly, handling information specifying e.g. the maximum force to which the object may be subjected. Based on the approximate position, controller 29 controls robot 24 to move the gripper 0 there. The approximate position must so accurate that when the gripper 0 has reached it, the 2D scanner 12 is close enough to detect and identify the object 19 and, if present, obstacles 20, 27 in its vicinity, so that based on data from the 2D scanner, the controller 29 can adjust the gripper 0 to the position of the object 19 by placing it in a position in front of the object 19 from where, by advancing the gripper 0 in the longitudinal direction of its fingers 1-4, the fingers can be placed at the flanks 23 and underneath the object 19. The robotic system is thus tolerant against minor irregularities of position of the objects that may occur when the objects are initially placed on the shelves 18 by hand or if an object is displaced by the gripper 0 while handling an adjacent one.

In this position of the gripper, if necessary, the position of fingers 3 and 4 along rail 10 is adjusted so that the tips of the fingers 3, 4 face gaps 22 between support strips 21 on which the object 19 rests.

The gripper 0 is then advanced so that the fingers 1-4 are placed at the flanks 23 and underneath object 19. Fingers 1, 2 are approached to each other as described above so that object 19 is nipped between their gripping surfaces 14. The force applied to the object 19 by the gripping surfaces 14 may be controlled based on information on the object 19 retrieved from the inventory. Object 19 is thus seized, raised and conveyed to trolley 28.

The trolley 28 can have a support surface formed of support strips, just like the shelves 18. In that case, the sensor 12 attached to the lower edge of the palm 5, as shown in Fig. 2, is appropriately placed for detecting gaps between the support strips, so that based on data from sensor 12, controller 29 can adjust the position and orientation of the fingers 3, 4 so that these, when descending the gripper, will smoothly enter the gaps and leave the object resting on the support strips.

Alternatively, when the object 19 has to be placed on a flat surface of trolley, fingers 3, 4 may first be moved away from each other, to positions beyond the gripping surfaces 14 of fingers 1, 2, and the gripper 0 then lowered until the underside of the object 19 or the fingers 3, 4 come into contact with a tabletop of trolley 28. By moving fingers 1, 2 away from each other, the object 19 is released.

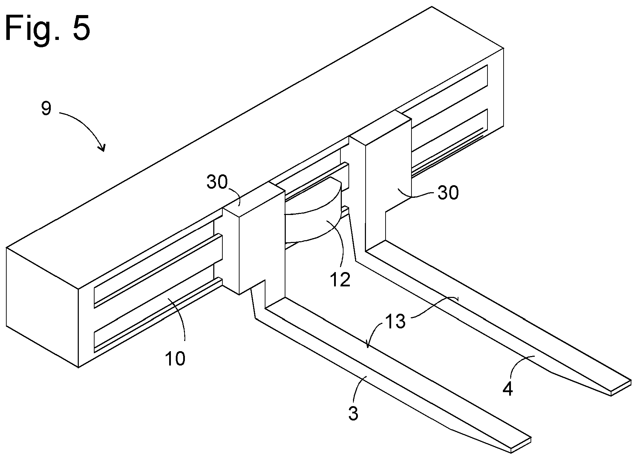

Fig. 5 illustrates the rail unit 9 and fingers 3, 4 guided by it according to a third embodiment. The fingers 1, 2 and their associated rail unit 6 are not shown since they are identical to those of Figs. 1 and 2. The fingers 3, 4 are cranked, their support surfaces 13 being located below a bottom side of rail unit 9. By this arrangement the fingers 3, 4 can be lowered into gaps 22 between support strips 21 of a shelf 18 from above, even if the rail unit 9 itself is located above the shelf 18. The gripper of this embodiment can therefore handle objects on a shelf the depth of which is much greater than the length of the fingers 1-4, and it can successively handle objects placed on the shelf one behind the other.

The 2D scanner 12 is placed between base portions 30 of the fingers 3, 4, above the support surfaces 13. It can be connected to one of the base portions 30 so that when the two fingers 3, 4 have been adjusted to enter gaps 22 on either side of the centre of gravity of an object 19 to be seized, the 2D scanner 12 is substantially aligned with the object 19.

### Reference numerals

- 0: gripper
- 1: finger
- 2: finger
- 3: finger
- 4: finger
- 5: palm
- 6: rail unit
- 7: rail
- 8: axis
- 9: rail unit
- 10: rail
- 11: rail unit
- 12: 2D scanner
- 13: support surface
- 14: gripping surface
- 15: sensor
- 16: tip
- 17: plane
- 18: shelf
- 19: object
- 20: object
- 21: support strip
- 22: gap
- 23: flank
- 24: robot
- 25: base
- 26: shelf unit
- 27: post
- 28: trolley
- 29: controller
- 30: base portion

## Claims

1. A robot gripper (0, 0') comprising a palm (5) and
- first and second fingers (1, 2) connected to said palm (5) that have gripping surfaces (14) facing each other for gripping an object (19) between them and that are displaceable with respect to each other along a first axis (8) normal to said gripping surfaces (14);
**characterized in that** the palm (5) carries at least a third finger (3) having a support surface (13), wherein, when the gripper (0, 0') is in a use pose in which the support surface (13) is oriented horizontally and facing upward, the first axis (8) is also horizontal and the gripping surfaces (14) are located above the support surfaces (13),
**characterised in that**
the third finger (3) is displaceable in parallel to the first axis (8), and
**in that** the third finger (3) is displaceable between different sides of a plane defined by the gripping surface (14) of the first finger (1).

2. The robot gripper of any of the preceding claims, wherein the palm (5) comprises a first rail (7) defining the first axis (8) for guiding displacement of the first and second fingers (1, 2), and a second rail (10) parallel to the first rail (7) and defining a second axis for guiding displacement of the third finger (3).

3. The robot gripper of any of the preceding claims, wherein a fourth finger (4) has a support surface (13) coplanar with the support surface (13) of the third finger (3).

4. The robot gripper of any of the preceding claims, wherein a force or torque sensor (15) is associated to at least one of the first and second fingers (1, 2).

5. The robot gripper of any of the preceding claims, further comprising a sensor which is arranged to monitor a space in front of the palm (5).

6. The robot gripper of claim 5, wherein the sensor is a 2D scanner (12), preferably having a detection plane (17) parallel to the support surface (13).

7. The robot gripper of claim 5, wherein the sensor is mounted to the palm (5) below the third finger (3).

8. The robot gripper of any of the preceding claims, wherein the first and second fingers (1, 2) are displaceable along said first axis (8) in a same direction or wherein one of the first and second fingers (1, 2) is displaceable along the first axis (8) while the other is standing still.

9. A robotic system comprising a robot equipped with the gripper (0, 0') of any of the preceding claims and a shelf (18) for storing objects (19, 20) to be handled by the gripper (0, 0').

10. The robotic system of claim 11, wherein an upper side of the shelf (18) comprises support strips (21) for supporting the object (19, 20), separated by gaps (22) sized to accommodate the third finger (3).

11. A method of operating the gripper of any of the claims 1 to 8, comprising the steps of
a) identifying an object (19) to be seized on a support,
b) placing the first and second fingers (1, 2) on opposite flanks (23) of the object (19);
c) approaching the first and second fingers (1, 2) until the object (19) is in contact with the gripping surfaces (14) of both fingers (1, 2);
d) placing at least the third finger (3) underneath the object (19); and
e) removing the object (19) from the support.

12. The method of claim 11, wherein step d) is carried out by the third finger (3) longitudinally engaging a gap (22) of the support.

13. The method of claim 11 or 12, wherein steps b) and d) are carried out by advancing the gripper (0, 0') in a longitudinal direction of the fingers (1-4), preferably further comprising the steps of, prior to steps b) and d),
f) identifying an obstacle (20, 27) adjacent to the object (19) to be seized;
g) disposing the gripper (0, 0') in a position in which it does not overlap with the obstacle (20, 27) when seen in the advancing direction, and
h) adjusting the position of one of the first and second fingers (1, 2) to overlap with a space between the object (20) and the obstacle (27).

## Patentansprüche

1. Ein Robotergreifer (0, 0') mit einer Handfläche (5) und
- einen ersten und einen zweiten Finger (1, 2), die mit der Handfläche (5) verbunden sind und einander zugewandte Greifflächen (14) zum Greifen eines Objekts (19) zwischen sich aufweisen und die relativ zueinander entlang einer ersten Achse (8) senkrecht zu den Greifflächen (14) verschiebbar sind;
die Handfläche (5) mindestens einen dritten Finger (3) mit einer Auflagefläche (13) trägt, wobei, wenn sich der Greifer (0, 0') in einer Gebrauchsstellung befindet, in der die Auflagefläche (13) horizontal ausgerichtet und nach oben gerichtet ist, die erste Achse (8) ebenfalls horizontal ist und sich die Greifflächen (14) über den Auflageflächen (13) befinden,
**dadurch gekennzeichnet, dass** der dritte Finger (3) parallel zur ersten Achse (8) verschiebbar ist, und
dass der dritte Finger (3) zwischen verschiedenen Seiten einer durch die Greiffläche (14) des ersten Fingers (1) definierten Ebene verschiebbar ist.

2. Robotergreifer nach einem der vorstehenden Ansprüche, wobei die Handfläche (5) eine erste Schiene (7), die die erste Achse (8) zur Führung der Verschiebung des ersten und zweiten Fingers (1, 2) definiert, und eine zweite Schiene (10) parallel zur ersten Schiene (7), die eine zweite Achse zur Führung der Verschiebung des dritten Fingers (3) definiert, umfasst.

3. Robotergreifer nach einem der vorstehenden Ansprüche, wobei ein vierter Finger (4) eine Auflagefläche (13) aufweist, die koplanar mit der Auflagefläche (13) des dritten Fingers (3) ist.

4. Robotergreifer nach einem der vorstehenden Ansprüche, wobei ein Kraft- oder Drehmomentsensor (15) mindestens einem der ersten und zweiten Finger (1, 2) zugeordnet ist.

5. Robotergreifer nach einem der vorstehenden Ansprüche, der ferner einen Sensor umfasst, der so angeordnet ist, dass er einen Raum vor der Handfläche (5) überwacht.

6. Der Robotergreifer nach Anspruch 5, wobei der Sensor ein 2D-Scanner (12) ist, der vorzugsweise eine zur Auflagefläche (13) parallele Erfassungsebene (17) aufweist.

7. Der Robotergreifer nach Anspruch 5, wobei der Sensor an der Handfläche (5) unterhalb des dritten Fingers (3) angebracht ist.

8. Robotergreifer nach einem der vorstehenden Ansprüche, wobei der erste und der zweite Finger (1, 2) entlang der ersten Achse (8) in derselben Richtung verschiebbar sind oder wobei einer der ersten und zweiten Finger (1, 2) entlang der ersten Achse (8) verschiebbar ist, während der andere stillsteht.

9. Robotersystem, umfassend einen Roboter, der mit dem Greifer (0, 0') aus einem der vorstehenden Ansprüche ausgestattet ist, und ein Regal (18) zum Lagern von Gegenständen (19, 20), die vom Greifer (0, 0') gehandhabt werden sollen.

10. Robotersystem nach Anspruch 11, wobei eine Oberseite des Regals (18) Stützstreifen (21) zum Stützen der Objekt en (19, 20) umfasst, die durch Lücken (22) voneinander getrennt sind, deren Größe so bemessen ist, dass sie den dritten Finger (3) aufnehmen können.

11. Verfahren zum Betreiben des Greifers nach einem der Ansprüche 1 bis 8, mit den folgenden Schritten
a) Identifizieren eines zu greifenden Objekts (19) auf einer Auflage,
b) Platzieren des ersten und zweiten Fingers (1, 2) an gegenüberliegenden Flanken (23) des Objekts (19);
c) Annähern des ersten und zweiten Fingers (1, 2), bis der Gegenstand (19) mit den Greifflächen (14) beider Finger (1, 2) in Kontakt ist;
d) Platzieren mindestens des dritten Fingers (3) unterhalb des Objekts (19); und
e) Entfernen des Objekts (19) von der Halterung.

12. Verfahren nach Anspruch 11, wobei Schritt d) dadurch ausgeführt wird, dass der dritte Finger (3) in Längsrichtung in einen Spalt (22) der Halterung eingreift.

13. Verfahren nach Anspruch 11 oder 12, wobei die Schritte b) und d) durch Vorwärtsbewegen des Greifers (0, 0') in Längsrichtung der Finger (1-4) durchgeführt werden, vorzugsweise weiter umfassend die Schritte vor den Schritten b) und d),
f) Identifizieren eines Hindernisses (20, 27) neben dem zu greifenden Objekt (19);
g) Anordnen des Greifers (0, 0') in einer Position, in der er sich in Vorschubrichtung gesehen nicht mit dem Hindernis (20, 27) überlappt, und
h) Anpassen der Position eines der ersten und zweiten Finger (1, 2), um einen Raum zwischen dem Objekt (20) und dem Hindernis (27) zu überlappen.

## Revendications

1. Dispositif de préhension de robot (0, 0') comprenant une paume (5) et
- des premier et deuxième doigts (1, 2) reliés à ladite paume (5) qui présentent des surfaces de préhension (14) en regard l'une de l'autre pour saisir entre elles un objet (19) et qui sont mobiles l'un par rapport à l'autre selon un premier axe (8) normal auxdites surfaces de préhension (14) ;
**caractérisé en ce que** la paume (5) porte au moins un troisième doigt (3) présentant une surface de support (13), lorsque le dispositif de préhension (0, 0') est dans une pose d'utilisation, la surface de support (13) étant orientée horizontalement et tournée vers le haut, le premier axe (8) étant également horizontal et les surfaces de préhension (14) étant situées au-dessus des surfaces d'appui (13),
**caractérisé en ce que** le troisième doigt (3) est mobile parallèlement au premier axe (8), et
**en ce que** le troisième doigt (3) est mobile entre différents côtés d'un plan défini par la surface de préhension (14) du premier doigt (1).

2. Dispositif de préhension de robot selon l'une quelconque des revendications précédentes, la paume (5) comprenant un premier rail (7) définissant le premier axe (8) pour guider le déplacement des premier et deuxième doigts (1, 2), et un second rail (10) parallèle au premier rail (7) et définissant un second axe pour guider le déplacement du troisième doigt (3).

3. Dispositif de préhension de robot selon l'une quelconque des revendications précédentes, un quatrième doigt (4) présentant une surface de support (13) coplanaire avec la surface de support (13) du troisième doigt (3).

4. Dispositif de préhension de robot selon l'une quelconque des revendications précédentes, un capteur de force ou de couple (15) étant associé à au moins l'un des premier et deuxième doigts (1, 2).

5. Dispositif de préhension de robot selon l'une quelconque des revendications précédentes, comprenant en outre un capteur qui est conçu pour surveiller un espace devant la paume (5).

6. Dispositif de préhension de robot selon la revendication 5, le capteur étant un scanner 2D (12), comprenant de préférence un plan de détection (17) parallèle à la surface de support (13).

7. Dispositif de préhension de robot selon la revendication 5, le capteur étant monté sur la paume (5) au-dessous du troisième doigt (3).

8. Dispositif de préhension de robot selon l'une quelconque des revendications précédentes, les premier et deuxième doigts (1, 2) étant mobiles le long dudit premier axe (8) dans une même direction ou l'un des premier et deuxième doigts (1, 2) étant mobile le long du premier axe (8) tandis que l'autre est immobile.

9. Système robotique comprenant un robot équipé du dispositif de préhension (0, 0') selon l'une quelconque des revendications précédentes et d'une étagère (18) pour stocker des objets (19, 20) destinés à être manipulés par le dispositif de préhension (0, 0').

10. Système robotique selon la revendication 11, un côté supérieur de l'étagère (18) comprenant des bandes de support (21) pour supporter l'objet (19, 20), séparées par des espaces (22) dimensionnés pour recevoir le troisième doigt (3).

11. Procédé de fonctionnement du dispositif de préhension selon l'une quelconque des revendications 1 à 8, comprenant les étapes consistant à
a) identifier un objet (19) destiné à être saisi sur un support,
b) placer les premier et deuxième doigts (1, 2) sur des flancs (23) opposés de l'objet (19) ;
c) approcher les premier et deuxième doigts (1, 2) jusqu'à ce que l'objet (19) soit en contact avec les surfaces de préhension (14) des deux doigts (1, 2) ;
d) placer au moins le troisième doigt (3) en dessous de l'objet (19) ; et
e) retirer l'objet (19) du support.

12. Procédé selon la revendication 11, l'étape d) étant exécutée par le troisième doigt (3) s'insérant longitudinalement dans un espace (22) du support.

13. Procédé selon la revendication 11 ou 12, les étapes b) et d) étant exécutées en avançant le dispositif de préhension (0, 0') dans une direction longitudinale des doigts (1-4), comprenant de préférence en outre les étapes consistant à, avant les étapes b) et d),
f) identifier un obstacle (20, 27) adjacent à l'objet (19) à saisir ;
g) disposer le dispositif de préhension (0, 0') dans une position dans laquelle il ne chevauche pas l'obstacle (20, 27) lorsqu'il est vu dans le sens de l'avancée, et
h) régler la position de l'un des premier et deuxième doigts (1, 2) pour chevaucher un espace entre l'objet (20) et l'obstacle (27).
